# EUROPÄISCHE PATENTSCHRIFT

(11) **EP 0 437 680 B1**
(45) Veröffentlichungstag und Bekanntmachung des Hinweises auf die Patenterteilung: **09.03.1994**
(21) Anmeldenummer: 90120039.4
(22) Anmeldetag: 19.10.1990
(51) Int. Cl.: B60R 16/00

(54) **Schalter**
Switch
Interrupteur

(30) Priorität: 19.01.1990 DE 4001440
(43) Veröffentlichungstag der Anmeldung: 24.07.1991
(73) Patentinhaber: Dr.Ing.h.c. F. Porsche Aktiengesellschaft, 70435 Stuttgart (DE)
(72) Erfinder: Ritter, Bernhard, Dipl.-Ing. (FH), W-7350 Pforzheim (DE)

(56) Entgegenhaltungen:
- DE-A- 3 413 380
- US-A- 4 644 235
- PATENT ABSTRACTS OF JAPAN vol. 10, no. 253 (M-512)(2309) 20 August 1986,& JP-A-61 81223 (MAZDA) 24 April 1986,

## Beschreibung

Die Erfindung betrifft einen Schalter nach dem Oberbegriff des Anspruch 1.

In der DE-OS 34 13 380 wird ein manueller Bedienschalter für ein Cabriolet-Verdeck eines Kraftfahrzeugs beschrieben, der an einem Armaturenbrett vorgesehen ist.

Aufgabe der Erfindung ist es, einen Schalter zur Ansteuerung eines Kraftfahrzeug-Cabriolet-Verdecks fahr- und verdeckbetriebssicher anzuordnen und auszubilden.

Erfindungsgemäß wird diese Aufgabe durch die kennzeichnenden Merkmale des Patentanspruchs 1 gelöst. Weitere die Erfindung ausgestaltende Merkmale sind in den Unteransprüchen enthalten.

Die mit der Erfindung insbesondere erzielten Vorteile sind darin zu sehen, daß eine Bedienung des Schalters und damit eine Betätigung des Cabriolet-Verdecks bei geöffneter Handbremse, also bei fahrendem Fahrzeug, ausgeschlossen ist. Ein Schließen und Öffnen des Verdecks während der Fahrt würde nicht nur den Fahrer bei der Überwachung des allgemeinen Verkehrgeschehens ablenken, sondern das Verdeck wäre dann auch unkontrollierten Luftströmungen, hervorgerufen durch den Fahrtwind, ausgesetzt, was zu Verdeckbeschädigungen führen könnte.

In der Zeichnung ist ein Ausführungsbeispiel der Erfindung dargestellt, das nachstehend näher beschrieben ist.

Es zeigt:

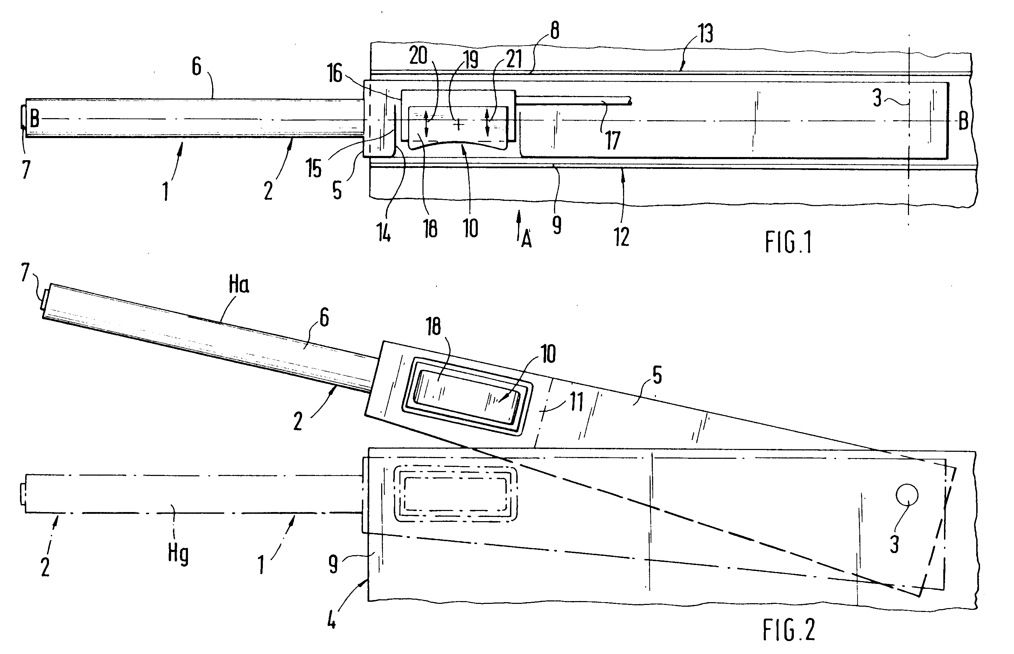

- Fig. 1: eine Draufsicht eines Handbremshebels mit dem erfindungsgemäßen Schalter,
- Fig. 2: eine Ansicht in Pfeilrichtung A der Fig. 1.

Eine Handbremse 1 ist im Bereich eines Mitteltunnels eines nicht näher dargestellten Kraftfahrzeugs, das ein Cabriolet-Verdeck aufweist, angeordnet, wobei eine Mittellängsachse B-B der Handbremse 1 in Fahrzeuglängsrichtung ausgerichtet ist. Die Handbremse 1 umfaßt ein Stockteil 2, das bei 3 schwenkbar gelagert ist und zwar in einem beispielsweise im Querschnitt U-förmigen Gehäuse 4. Das Stockteil 2 wird durch einen Träger 5 und einen rohrförmigen Handgriff 6 gebildet, an dessen freiem Ende eine Entriegelungsknopf 7 angebracht ist.

In der geöffneten Stellung Hg der Handbremse 1 ruht das Stockteil 2 im Gehäuse 4, d.h. aufrechte Wände 8, 9 des Gehäuses 4 bilden eine örtliche Abdeckung für das Stockteil 2 im Bereich des Trägers 5. Dagegen ist das Stockteil 2 mit seinem Träger 5 in der angezogenen Stellung Ha der Handbremse 1 aus der Abdeckung bzw. dem Gehäuse 4 zumindest bereichsweise herausgeführt.

Das Cabriolet-Verdeck - nicht gezeigt - wird mittels einer hilfskraftbetätigten Einrichtung z.B. Elektromotor aus einer Schließstellung in eine Offenstellung betätigt, was nicht näher dargestellt ist. Die Ansteuerung des Elektromotors wird mit Hilfe eines Schalters 10 bewerkstelligt, der nur dann bedienbar ist, wenn sich das Kraftfahrzeug in unbewegtem Zustand befindet. Der Schalter 10 ist deshalb am Stockteil 2 angeordnet, und zwar in einer Zone 11, die in der angezogenen Stellung Ha der Handbremse aus der Abdeckung, gebildet durch die Wände 8, 9, herausgeführt ist. Anders ausgedrückt, nur in der Stellung Ha der Handbremse 1 in der das Fahrzeug im Stand gesichert ist, ist der Schalter 10 zugänglich. Der Schalter 10 ist im Ausführungsbeispiel auf der dem Fahrer zugekehrten Seite 12 - eine aufrechte Wand - des Stockteils 2 angebracht; er kann aber auch auf der dem Fahrer abgekehrten Seite 13 vorgesehen sein.

Zur versenkten Aufnahme des Schalters 10 ist am Stockteil 2 bzw. Träger 5 eine Öffnung 14 vorgesehen, die mit einem Flansch 15 ein Schaltergehäuse 16 umgibt; letzteres ist mit einem elektrischen Kabel 17 verbunden, das an den Elektromotor angeschlossen ist.

Der Schalter ist ein Wippschalter, wobei seine Wippe 18 bei 19 schwenkbar gelagert ist, dergestalt, daß er gemäß Pfeilangabe 20 und 21 verstellbar ist.

## Patentansprüche

1. Schalter zur Ansteuerung eines hilfskraftbetätigten Cabriolet-Verdecks eines Kraftfahrzeugs, das von einer geschlossenen Stellung in eine geöffnete Stellung bewegbar ist, dadurch gekennzeichnet, daß der Schalter (10) nur dann bedienbar ist, wenn das Kraftfahrzeug (1) sich in unbewegtem Zustand befindet.

2. Schalter nach Anspruch 1, dadurch gekennzeichnet, daß der Schalter an einer Handbremse (1) angeordnet ist und zwar derart, daß er nur bei angezogener Handbremse (1; Stellung Ha) zugänglich ist.

3. Schalter nach Anspruch 2, dadurch gekennzeichnet, daß der Schalter (10) an einem Stockteil (2) der Handbremse (1) angebracht ist, wobei der Schalter (10) in einer Zone (11) des Stockteils (2) ruht, die bei angezogener Handbremse (1; Stellung Ha) aus einer Abdeckung z.B. eines Gehäuses (4) herausragt.

4. Schalter nach einem oder mehreren der vorangehenden Ansprüche, dadurch gekennzeichnet, daß der Schalter (10) ein in das Stockteil (2) zumindest abschnittsweise versenkter Wippschalter ist.

5. Schalter nach einem oder mehreren der vorangehenden Ansprüche, dadurch gekennzeichnet, daß er auf einer dem Fahrer des Kraftfahrzeugs zugekehrten Seite (12) des Stockteils (2) angebracht ist.

6. Schalter nach einem oder mehreren der vorangehenden Ansprüche, dadurch gekennzeichnet, daß er auf einem dem Fahrer des Kraftfahrzeugs abgekehrten Seite (13) des Stockteils (2) angebracht ist.

## Claims

1. A switch for actuating a convertible top of a motor vehicle actuated by auxiliary force and movable from a closed position into an opened position, **characterized in that** the switch (10) is operable only when the motor vehicle (1) [*sic*] is in the unmoved state.

2. A switch according to Claim 1, **characterized in that** the switch is mounted on a hand brake (1), in such a way that it is accessible when the hand brake (1) is on (position Ha).

3. A switch according to Claim 2, **characterized in that** the switch (10) is mounted on a stem part (2) of the hand brake (1), the switch (10) resting in an area (11) of the stem part (2) which projects out of a covering, for example a housing (4), when the hand brake (1) is on (position Ha).

4. A switch according to one or more of the preceding Claims, **characterized in that** the switch (10) is a rocker-type switch recessed at least in part into the stem part (2).

5. A switch according to one or more of the preceding Claims, **characterized in that** it is mounted on a side (12) of the stem part (2) facing the driver of the motor vehicle.

6. A switch according to one or more of the preceding Claims, **characterized in that** it is mounted on a side (13) of the stem part (2) remote from the driver of the motor vehicle.

## Revendications

1. Interrupteur pour la commande d'une capote d'un cabriolet, actionnée par une force auxiliaire, qui peut passer d'une position fermée à une position ouverte, caractérisé en ce que l'interrupteur (10) ne peut être commandé que lorsque le véhicule (1) se trouve à l'arrêt.

2. Interrupteur selon la revendication 1, caractérisé en ce que l'interrupteur est placé sur un frein à main (1) et ce de manière qu'il ne soit accessible que lorsque le frein à main est relevé (1 ; position Ha).

3. Interrupteur selon la revendication 2, caractérisé en ce que l'interrupteur (10) est placé sur un manche (2) du frein à main (1), l'interrupteur (10) reposant dans une zone (11) du manche (2), qui dépasse d'une couverture, par exemple d'un boîtier (4), lorsque le frein à main (1) est relevé (1 ; position Ha).

4. Interrupteur selon une ou plusieurs des revendications précédentes, caractérisé en ce que l'interrupteur (10) est un interrupteur à bascule encastré au moins en partie dans le manche (2).

5. Interrupteur selon une ou plusieurs des revendications précédentes, caractérisé en ce qu'il est monté sur un côté (12) du manche (2), tourné vers le conducteur du véhicule.

6. Interrupteur selon une ou plusieurs des revendications précédentes, caractérisé en ce qu'il est monté sur un côté (13) du manche (2), tourné à l'opposé du conducteur du véhicule.
